# EUROPEAN PATENT APPLICATION

(11) **EP 4 414 052 A1**
(43) Date of publication of application: **14.08.2024**
(21) Application number: 23156120.0
(22) Date of filing: 10.02.2023
(51) Int. Cl.: B01D 53/94, B01J 29/68, B01J 29/76, B01J 35/00, B01J 35/04, F01N 3/20

(54) **SCR CATALYST ARTICLE AND SYSTEMS FOR REDUCING N2O IN EXHAUST GAS**

(71) Applicant: Johnson Matthey Public Limited Company, London EC4A 4AB (GB)
(72) Inventor: ALCOVE CLAVE, Silvia, Sonning Common RG4 9NH (GB); COLLIER, Jillian, Sonning Common RG4 9NH (GB); Georgieva, vESELINA mIHAYLOVA, Sonning Common RG4 9NH (GB); GREEN, Alexander Nicholas Michael, Sonning Common RG4 9NH (GB); MANTAROSIE, Loredana, Sonning Common RG4 9NH (GB); RUGGERI, Maria Pia, Sonning Common RG4 9NH (GB); VILLAMAINA, Roberta, Sonning Common RG4 9NH (GB)
(74) Representative: Johnson Matthey Plc

(57) **Abstract**

Provided is an SCR catalyst article comprising a substrate having thereon a second catalyst composition downstream of a first catalyst composition, wherein the first and second catalyst compositions are different and wherein the first catalyst composition is an SCR catalyst composition and the second catalyst composition comprises an Fe-loaded small- or medium-pore molecular sieve, the small- or medium-pore molecular sieve having a silica-to-alumina ratio (SAR) of from 6 to 19.

## Description

The present invention relates to an SCR catalyst article and systems in which the N₂O emissions ultimately released from the exhaust-gas treatment system can be reduced.

Exhaust gas from combustion engines and the like typically contains pollutants such as NOₓ (NO and NO₂), which have well known negative effects on the environment and on health. Accordingly, systems for treating such exhaust gas typically comprise catalysts for the abatement of NOₓ, such as selective catalytic reduction (SCR) catalysts. SCR catalysts, and their mechanism of action, are well known.

Such exhaust gas may also contain nitrous oxide (N₂O), typically in lower concentrations. However, the use of SCR catalysts, as well as other known catalysts upstream, may also generate additional N₂O as a by-product. To a lesser extent than NOₓ, but still significantly, N₂O also contributes to air pollution. However, conventional exhaust gas treatment systems do not generally contain catalysts for the primary purpose of N₂O abatement, and little development has been made to produce catalysts that are effective at reducing N₂O in exhaust gas.

There is therefore a need to develop exhaust-gas catalysts and exhaust gas treatment systems that can effectively reduce the amount of N₂O that is ultimately released into the atmosphere, while still effectively reducing the more significant pollutants, such as NOₓ.

The present invention seeks to tackle at least some of the problems associated with the prior art or at least to provide a commercially acceptable alternative solution thereto.

The present invention provides an SCR catalyst article, exhaust gas treatment systems, a fuel combustion and exhaust gas treatment system, a method of treating an exhaust gas and a use of the catalyst described herein according to the claims appended hereto.

Specifically, in a first aspect the present invention provides an SCR catalyst article comprising a substrate having thereon a second catalyst composition downstream of a first catalyst composition, wherein the first and second catalyst compositions are different and wherein the first catalyst composition is an SCR catalyst composition and the second catalyst composition comprises an Fe-loaded small- or medium-pore molecular sieve, the small- or medium-pore molecular sieve having a silica-to-alumina ratio (SAR) of from 6 to 19.

Each aspect or embodiment as defined herein may be combined with any other aspect(s) or embodiment(s) unless clearly indicated to the contrary. In particular, any features indicated as being preferred or advantageous may be combined with any other feature indicated as being preferred or advantageous.

The Inventors have surprisingly found that catalysts comprising Fe-loaded small- and medium-pore molecular sieves may exhibit particularly high N₂O conversion when treating exhaust gases, and further that reducing the SAR of said molecular sieves may increase the N₂O conversion of the catalyst even further. This is unexpected.

Such catalysts may therefore be particularly effective for use in exhaust systems for treating exhaust gas in which there is a relatively high N₂O concentration, such as downstream of an SCR catalyst, for example. In other words, the second catalyst composition of the invention may be used to abate N₂O in an exhaust gas in an analogous manner to an ammonia slip catalyst (ASC) that treats any "slipped" ammonia. That is, the second catalyst composition of the invention may be used to abate "N₂O slip" through and/or generated by the first catalyst composition. This is advantageous and such a use has not previously been contemplated.

By "N₂O conversion", this is intended to refer to the typical chemical reaction that is facilitated by such a catalyst, which is: 2N₂O → 2N₂ + O₂.

The Inventors have also surprisingly found that the Fe-loaded molecular sieves of the present invention exhibit increased N₂O conversion compared to Fe-loaded large-pore molecular sieves, and to small- and medium-pore molecular sieves having higher SARs. This has not previously been investigated.

These results are also particularly surprising because it is not conventional to aim to reduce the SAR in molecular sieves for use in the treatment of exhaust gas from combustion engines. This is because it is known that, in general, reducing the SAR of such molecular sieves (or zeolites, in particular) may reduce the hydrothermal stability of the molecular-sieve-based catalyst. A reduction in hydrothermal stability is clearly undesirable for such applications, in which a typical operating environment may involve temperatures of several hundred degrees Celsius. However, for the present invention, the advantages gained in N₂O conversion may offset, at least to some extent, the disadvantages of reducing the SAR of the molecular sieve.

The term "first", "second" etc. as used herein is intended as a label and does not limit the relative arrangement or location of the corresponding feature (here, the catalyst compositions) within the exhaust gas treatment system, unless otherwise specified, such as by use of the word "upstream" or "downstream" to define the relative locations in the catalyst article or exhaust gas treatment system.

The term "upstream" as used herein indicates a direction in a system towards the source of the exhaust gas. By contrast, the term "downstream" as used herein indicates a direction in a system away from the source of the exhaust gas. For the SCR catalyst article, these directions, of course, refer to the intended direction of use of the SCR catalyst article when present in an exhaust gas treatment system.

In the present aspect, the second catalyst composition is downstream of the first catalyst composition. In this aspect, this wording is intended to mean that at least a portion of the second catalyst composition is downstream of the first catalyst composition. In other words, a portion of the first and second catalyst compositions may be overlapping, such that a portion of the first and second catalyst compositions are essentially in the same position in the (literal) upstream-to-downstream direction, or even that a portion of the second catalyst composition may be present upstream of the first catalyst composition.

This wording may also encompass that the first catalyst composition is present in an upper layer, zone, region or washcoat disposed on the substrate, for example, and the second catalyst composition is present in a lower layer, zone, region or washcoat disposed on the substrate, such that the SCR catalyst article is configured such that exhaust gas would contact the first catalyst composition prior to contacting the second catalyst composition in use. In such an embodiment, the upper layer, zone, region or washcoat comprising the first catalyst composition may therefore completely cover the lower layer, zone, region or washcoat comprising the second catalyst composition.

However, preferably, this wording is intended to encompass that (at least a portion of) the second catalyst composition is downstream of the first catalyst composition in the (literal) upstream-to-downstream direction, such as in a linear upstream-to-downstream direction. More preferably, at least 70 wt.%, even more preferably at least 80 wt.%, still more preferably at least 90 wt.%, yet still more preferably at least 95 wt.%, yet still more preferably at least 99 wt.% and most preferably 100 wt.% of the second catalyst composition is downstream of the first catalyst composition (in the (literal) upstream-to-downstream direction, such as in a linear upstream-to-downstream direction), based on the total weight of the second catalyst composition.

The term "article" or "catalyst article" as used herein may encompass an article in which a catalyst is supported thereon or therein. The article may take the form of, for example, a honeycomb monolith, such as a flow-through monolith or a filter, e.g. a wall flow filter. The catalyst article may also be in pellet form.

The term "SCR catalyst article" as used herein may therefore encompass a catalyst article that is suitable for catalysing the selective catalytic reduction reaction, such as the selective catalytic reduction of NOₓ, preferably in the presence of a reductant, such as a nitrogenous reductant or methane. In some preferred embodiments, the SCR catalyst article may be a selective catalytic reduction filter (SCRF). That is, the article/substrate may comprise a filter. In other words, the substrate may be a filtering substrate.

The term "catalyst composition" as used herein may generally encompass a composition that is catalytically active towards pollutants present in exhaust gas.

The term "substrate" as used herein may encompass, for example, a ceramic or metallic flow-through honeycomb, or a filter block, e.g. a wall flow filter. The substrate may comprise a ceramic or metallic monolithic substrate. The substrate may vary in its material composition, size and configuration, cell shape and density, and wall thickness. Suitable substrate materials are known in the art, such as cordierite.

The term "having thereon" as used herein may encompass that the first and/or second catalyst compositions are disposed on the substrate and/or that the first and/or second catalyst compositions are present in the substrate, such as in the form of an extruded substrate made from extrudate comprising the first and/or second catalyst composition.

The term "disposed on" as used herein may encompass either having a catalytic composition directly disposed on the substrate, i.e. with no intervening material, and/or indirectly disposed on the substrate, i.e. with intervening material. If the substrate is porous, then the term "disposed on" may also encompass having the catalytic composition disposed therein, for example within the pores of the substrate, i.e. wherein the catalytic composition is disposed thereon and/or therein. The catalytic composition is typically disposed on the substrate in the form of a washcoat. The term "washcoat" as used herein is well-known in the field and refers to an adherent coating that is applied to a substrate usually during the production of a catalyst. How the molecular sieve may be disposed on the substrate is not particularly important for the purpose of the present invention.

The term "different" as used herein in the context of the first and second catalyst compositions may encompass that the catalyst compositions are completely different, for example if the first catalyst composition does not comprise a molecular sieve or is not molecular-sieve based. Alternatively, the term "different" may simply encompass that the framework (i.e. the Framework Type Code) of the molecular sieve, or another property of the molecular sieve, such as the SAR, is different, or even that a metal other than Fe, for example, is present in the first catalyst composition (such as loaded on a molecular sieve).

Preferably, the first and second catalyst compositions are also separate. The term "separate" as used herein in the context of "separate first and second catalyst compositions" may encompass that the first and second catalyst compositions are disposed on or present in the substrate in distinct, discrete locations. In other words, the first and second catalyst compositions may not be mixed so as to be present in the same catalytic region, layer, zone or washcoat. Of course, it will be appreciated that there may be minor amounts of mixing at any boundary between the first and second catalyst compositions, for example, within practical limitations. In some embodiments, it may be that the mixing of the first and second catalyst compositions may result in an undesirable deactivation of one or both of the catalyst compositions, such that it may be preferably that the first and second catalyst compositions are kept separate.

The term "SCR catalyst composition" as used herein may encompass a catalyst composition that is suitable for catalysing the selective catalytic reduction reaction, such as the selective catalytic reduction of NOₓ, preferably in the presence of a reductant, such as a nitrogenous reductant or methane. However, it should be understood that the SCR catalyst composition may not be limited to only such a use. For example, the SCR catalyst composition may also exhibit further catalytic activity for use as a diesel oxidation catalyst (DOC) and/or a passive NOₓ adsorber (PNA) and/or an ASC, and/or another type of known exhaust-gas catalyst. The SCR catalyst article, in some embodiments, may also comprise further layers, zones, regions or washcoats that comprise catalysts exhibiting this catalytic activity.

In an alternative aspect of the invention, the first catalyst composition is a DOC and/or a PNA and/or an ASC catalyst composition (i.e. and not necessarily an SCR catalyst composition). DOCs, PNAs and/or ASCs may also generate additional N₂O into the exhaust gas. The same advantages as described herein in relation to the first aspect may therefore still apply.

The term "Fe-loaded" as used herein may encompass that the molecular sieve is metal-promoted with Fe, wherein the Fe maybe loaded into the molecular sieve. In a metal-loaded molecular sieve, the loaded metal is a type of "extra-framework metal", that is, a metal that resides within the molecular sieve and/or on at least a portion of the molecular sieve surface. This definition does not include atoms constituting the framework of the molecular sieve.

Metal-loaded molecular sieves, in general, and methods of manufacturing such metal-loaded molecular sieves, are known to the skilled person. For example, several methods have been mentioned in the literature for preparing metal-loaded molecular sieves, in particular metal-loaded zeolites. The direct synthesis of metal-loaded zeolites is a complicated process and depends on the synthesis conditions (see M. Moliner, ISRN Materials Science, 2012, Article ID 789525). An alternative is to use a commercial zeolite support and to subsequently add metal by post-synthesis treatment of the zeolite, for example, by wet impregnation, wet ion exchange or solid-state ion exchange.

Known wet ion-exchange methods for the addition of metal to molecular sieves (e.g. zeolites) typically employ soluble metal salts, such as metal acetates, metal sulphates or metal chlorides, as the active metal precursor, wherein the active metal precursor is reacted with the molecular sieve in aqueous solution. In order to accelerate ion-exchange, such processes typically require a heating step, wherein the mixture may be heated to a temperature in the range 70 to 80°C for up to several hours.

The term "molecular sieve" as used herein is well known to the skilled person and may encompass crystalline or quasi-crystalline materials which can be, for example aluminosilicates (zeolites) or silicoaluminophosphates (SAPOs). Such molecular sieves are constructed of repeating SiO₄, AlO₄, and optionally PO₄ tetrahedral units linked together, for example in rings, to form frameworks having regular intra-crystalline cavities and channels of molecular dimensions. The specific arrangement of tetrahedral units (ring members) gives rise to the molecular sieve's framework, and by convention, each unique framework is assigned a unique three-letter code (e.g., "CHA") by the International Zeolite Association (IZA).

Molecular sieves may exist as "H⁺-form" or "NH₄⁺ form" molecular sieves, for example. The term "H⁺-form" in relation to a molecular sieve refers to a molecular sieve having an anionic framework wherein the charge of the framework is counterbalanced by protons (i.e. H⁺ cations). The term "NH₄⁺ form" in relation to a molecular sieve refers to a molecular sieve having an anionic framework wherein the charge of the framework is counterbalanced by ammonium cations (NH₄⁺ cations). When metal-loaded (e.g. Fe), these molecular sieves are no longer considered to be in their "H⁺-form" or "NH₄⁺ form".

Molecular sieves (e.g. zeolites) may also be categorised by pore size, e.g. a maximum number of tetrahedral atoms present in a molecular sieve's framework. As defined herein, a "small-pore" molecular sieve, such as CHA, contains a maximum ring size of eight tetrahedral atoms, whereas a "medium-pore" molecular sieve, e.g. MFI, contains a maximum ring size of ten tetrahedral atoms; and a "large-pore" molecular sieve, such as BEA, contains a maximum ring size of twelve tetrahedral atoms. In the present invention, the small- or medium-pore molecular sieve is defined as such in accordance with these generally understood definitions.

The present aspect requires that the second catalyst composition comprises an Fe-loaded small- or medium-pore molecular sieve. Of course, therefore, the invention may encompass an embodiment in which the second catalyst composition comprises Fe loaded on two or more different small- or medium-pore molecular sieves. The term "different" small- or medium-pore molecular sieves may encompass that the framework (i.e. the Framework Type Code) of the molecular sieve, or another property of the molecular sieve, such as the SAR, is different.

The term "silica-to-alumina ratio" or "SAR" as used herein may encompass the molar ratio of silicon to aluminium present in the molecular sieve framework, calculated on the basis of the silica (SiO₂) and the alumina (Al₂O₃), rather than the silicon and aluminium atoms. Of course, in the chemical structure of the molecular sieve framework, the silicon and aluminium will not typically be present in the form of discrete silica and alumina. The SAR is a term commonly used in the art and would be understood by the skilled person.

Where the molecular sieve is a small-pore molecular sieve, the small-pore molecular sieve may have a framework defined by a Framework Type Code selected from ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, KFI, LEV, LTA, MER, MON, NSI, OWE, PAU, PHI, RHO, RTH, SAT, SAV, SFW, SIV, THO, TSC, UEI, UFI, VNI, YUG, and ZON, and mixtures and/or intergrowths thereof.

Where the molecular sieve is a medium-pore molecular sieve, the medium-pore molecular sieve may have a framework defined by a Framework Type Code selected from AEL, AFO, AHT, BOF, BOZ, CGF, CGS, CHI, DAC, EUO, FER, HEU, IMF, ITH, ITR, JRY, JSR, JST, LAU, LOV, MEL, MFI, MFS, MRE, MTT, MVY, MWW, NAB, NAT, NES, OBW, PAR, PCR, PON, PUN, RRO, RSN, SFF, SFG, STF, STI, STT, STW, SVR, SZR, TER, TON, TUN, UOS, VSV, WEI, and WEN, and mixtures and/or intergrowths thereof.

Preferably, the molecular sieve of the second catalyst composition is a small-pore molecular sieve. However, also preferred is a small- or medium-pore molecular sieve having a framework defined by a Framework Type Code selected from CHA, FER, MFI, AEI and AEI-CHA intergrowth, preferably selected from CHA, FER, AEI and AEI-CHA intergrowth. Most preferred are the small-pore Framework Type Codes CHA and AEI. That is, the molecular sieve preferably has a framework defined by a Framework Type Code selected from CHA and AEI and most preferably the molecular sieve has a framework defined by a Framework Type Code CHA.

Fe-loaded molecular sieves having frameworks defined by these preferred specific Framework Type Codes have been shown to exhibit higher N₂O conversion than small-pore molecular sieves with higher SAR (such as Fe/CHA having a SAR of 25) and Fe-loaded large-pore molecular sieves (such as Fe/BEA).

Preferably, the small- or medium-pore molecular sieve of the second catalyst composition is a small- or medium-pore zeolite.

The small- or medium-pore molecular sieve is preferably a powdered crystalline molecular sieve (i.e. in particulate form), wherein the particles comprise individual crystals, agglomerations of crystals or a combination of both. The crystalline molecular sieve may have a mean crystal size, as measured by scanning electron microscopy (SEM), of ≥ 0.5 µm, preferably between about 0.5 and about 15 µm, such as about 0.5 to 10 µm, about 0.5 to about 5 µm, about 1 to about 5 µm, or about 2 to about 5 µm.

The SCR catalyst composition may comprise a metal-oxide-based SCR catalyst composition, preferably comprising vanadium or tungsten or a mixture thereof supported on a refractory oxide, the refractory oxide preferably being selected from the group consisting of alumina, silica, titania, zirconia, ceria and combinations thereof. The metal-oxide-based SCR catalyst composition may comprise an oxide of vanadium (e.g. V₂O₅) and/or an oxide of tungsten (e.g. WOs) supported on a refractory oxide selected from the group consisting of titania (e.g. TiO₂), ceria (e.g. CeO₂), and a mixed or composite oxide of cerium and zirconium (e.g. CeₓZr₍₁₋ₓ₎O₂, wherein x = 0.1 to 0.9, preferably x = 0.2 to 0.5). When the refractory oxide is titania (e.g. TiO₂), then preferably the concentration of the oxide of vanadium is from 0.5 to 6 wt.% (e.g. of the metal-oxide-based SCR catalyst composition) and/or the concentration of the oxide of tungsten (e.g. WOs) is from 5 to 20 wt.%. More preferably, the oxide of vanadium (e.g. V₂O₅) and the oxide of tungsten (e.g. WOs) are supported on titania (e.g. TiO₂). When the refractory oxide is ceria (e.g. CeO₂), then preferably the concentration of the oxide of vanadium is from 0.1 to 9 wt.% (e.g. of the metal-oxide-based SCR catalyst composition) and/or the concentration of the oxide of tungsten (e.g. WOs) is from 0.1 to 9 wt%. The metal-oxide-based SCR catalyst composition may comprise an oxide of vanadium (e.g. V₂O₅) and optionally an oxide of tungsten (e.g. WOs), supported on titania (e.g. TiO₂).

Alternatively, the SCR catalyst composition may comprise a molecular-sieve-based SCR catalyst composition. The molecular-sieve-based SCR catalyst composition comprises a molecular sieve, which is optionally a transition-metal-exchanged molecular sieve. It is preferable that the SCR catalyst composition comprises a transition-metal-exchanged molecular sieve. The molecular sieve may be a small- or medium-pore molecular sieve as described herein. The molecular sieve may be a large-pore molecular sieve. When the molecular sieve is a large-pore molecular sieve, then the large-pore molecular sieve may have a framework defined by a Framework Type Code selected from the group consisting of AFI, AFR, AFS, AFY, ASV, ATO, ATS, BEA, BEC, BOG, BPH, BSV, CAN, CON, CZP, DFO, EMT, EON, EZT, FAU, GME, GON, IFR, ISV, ITG, IWR, IWS, IWV, IWW, JSR, LTF, LTL, MAZ, MEI, MOR, MOZ, MSE, MTW, NPO, OFF, OKO, OSI, -RON, RWY, SAF, SAO, SBE, SBS, SBT, SEW, SFE, SFO, SFS, SFV, SOF, SOS, STO, SSF, SSY, USI, UWY, and VET, or a mixture and/or an intergrowth of two or more thereof. Preferably, the large-pore molecular sieve has a framework defined by a Framework Type Code selected from the group consisting of AFI, BEA, MAZ, MOR, and OFF. More preferably, the large-pore molecular sieve has a framework defined by a Framework Type Code selected from the group consisting of BEA, MOR and MFI. When the large-pore molecular sieve is a zeolite and has a framework defined by the Framework Type Code BEA, FAU or MOR, then the zeolite may be a beta zeolite, faujasite, zeolite Y, zeolite X or mordenite.

Preferably, the molecular sieve is a zeolite.

The transition metal may be selected from the group consisting of cobalt, copper, iron, manganese, nickel, palladium, platinum, ruthenium and rhenium. Copper may be particularly preferred due to its known low-temperature NOₓ reduction activity.

Preferably, the first catalyst composition comprises Cu/CHA or a V-based SCR catalyst.

The term "Cu/CHA" or the like as used herein may encompass a molecular sieve having a framework defined by a CHA Framework Type Code and comprising Cu loaded thereon, as is conventionally used in the field. The molecular sieve is preferably a zeolite. Preferably, the Cu/CHA is loaded with from 0.1 to 20 wt.% Cu, more preferably from 0.5 to 10 wt.% Cu, even more preferably from 1 to 5 wt.% Cu, based on the total weight of the Cu/CHA.

The term "V-based catalyst" as used herein may encompass an SCR catalyst composition that comprises vanadium, such as those described above.

Such catalyst may typically generate particularly high concentrations of N₂O as a by-product of the SCR reaction, such as at operating temperatures of from 300 to 500°C, and therefore it may be particularly advantageous to have a second catalyst composition as defined herein downstream thereof.

Preferably, the small- or medium-pore molecular sieve of the second catalyst composition has a SAR of from 6 to 18, more preferably from 6 to 17, more preferably from 6 to 15, more preferably from 6 to 13, more preferably from 7 to 12, more preferably from 9 to 11, even more preferably about 10. As explained above, it has been surprisingly found that lowering the SAR of the Fe-loaded small- or medium-pore molecular sieve may increase the N₂O conversion that the Fe-loaded molecular sieve can exhibit as a catalyst. The above ranges therefore may be particularly preferred. Moreover, the Inventors have found that, unexpectedly, when decreasing the SAR of the molecular sieve, the N₂O conversion performance appears to plateau at a SAR of about 10. Thus, while all of the preferred Fe-loaded molecular sieves provide a notable improvement over higher-SAR small- and medium-pore molecular sieves, and large-pore molecular sieves, a SAR of about 10 may be most preferred. This is because reducing the SAR below this value may return minimal benefit in N₂O conversion performance while risking reducing the hydrothermal stability of the molecular sieve. In other words, a SAR of about 10 provides an unexpected balance between stability of the molecular sieve and the N₂O conversion performance of the Fe-loaded molecular sieve as a catalyst.

Accordingly, in some preferred embodiments, the present invention provides an SCR catalyst article comprising a substrate having thereon a second catalyst composition downstream of a first catalyst composition, wherein the first and second catalyst compositions are different and wherein the first catalyst composition is an SCR catalyst composition and the second catalyst composition comprises an Fe-loaded small- or medium-pore zeolite, the small- or medium-pore zeolite having a silica-to-alumina ratio (SAR) of from 6 to 13, preferably wherein the small- or medium-pore zeolite has a framework defined by a Framework Type Code selected from CHA, FER, MFI, AEI and AEI-CHA intergrowth, more preferably CHA or AEI.

Preferably, the small- or medium-pore molecular sieve of the second catalyst composition is loaded with at least 0.5 wt.% Fe, more preferably at least 1.5 wt.% Fe, preferably from 1.5 to 4 wt.% Fe, more preferably about 3 wt.% Fe, based on the total weight of the Fe-loaded small- or medium-pore molecular sieve. Catalysts having an Fe loading of about 3 wt.% have been shown to exhibit the advantageous N₂O conversions described herein.

Preferably, the SCR catalyst article is a flow-through monolith or a wall-flow filter. In other words, the substate preferably takes the form of a flow-through monolith or a wall-flow filter. Of course, the substrate may also comprise an "all-active extrudate" wherein a substrate comprises an extrusion of the Fe-loaded small- or medium-pore molecular sieve. If the SCR catalyst article is a wall-flow filter, then the first catalyst composition is preferably coated on the inlet end of the wall-flow filter and the second catalyst composition is preferably coated on the outlet end of the wall-flow filter. In other words, the inlet channels of the wall-flow filter preferably comprise the first catalyst composition and the outlet channels of the wall-flow filter preferably comprise the second catalyst composition.

Preferably, the first catalyst composition is present in a first zone and the second catalyst composition is present in a second zone, and wherein the first zone forms from 40 to 90% of an axial length of the SCR catalyst article and the second zone forms from 60 to 10% of an axial length of the SCR catalyst article, preferably wherein the first zone forms from 75 to 90% of an axial length of the SCR catalyst article and the second zone forms from 25 to 10% of an axial length of the SCR catalyst article. The axial length of the SCR catalyst article may correspond to the upstream-to-downstream direction of the SCR catalyst article, for example. The term "zone" as used herein may encompass a discrete region of the SCR catalyst article in which said catalyst composition is present and in which other catalyst compositions are substantially not present, such as in an amount of less than 0.1 wt.% based on the total weight of the zone.

Preferably, the first catalyst composition is present in a first zone and the second catalyst composition is present in a second zone, and wherein the first zone extends from an inlet end of the SCR catalyst article and the second zone extends from an outlet end of the SCR catalyst article.

The term "inlet end" as used herein may encompass the end of the SCR catalyst article in the upstream direction. The term "outlet end" as used herein may encompass the end of the SCR catalyst article in the downstream direction.

Preferably, the small- or medium-pore molecular sieve of the second catalyst composition is substantially free of base metals other than Fe loaded thereon. The term "substantially free of" as used herein may encompass that the small- or medium-pore molecular sieve of the second catalyst composition comprises less than 0.1 wt.%, more preferably less than 0.05 wt.%, even more preferably less than 0.01 wt.% and still more preferably less than 0.001 wt.% of the component (here, a base metal other than Fe), based on the total weight of the Fe-loaded small- or medium-pore molecular sieve. More preferably, the small- or medium-pore molecular sieve of the second catalyst composition does not comprise base metals other than Fe loaded thereon. More preferably, the small- or medium-pore molecular sieve of the second catalyst composition is substantially free of transition metals other than Fe loaded thereon. Most preferably, the small- or medium-pore molecular sieve of the second catalyst composition does not comprise transition metals other than Fe loaded thereon.

In other words, Fe is preferably the only base metal that is loaded on the small- or medium-pore molecular sieve and more preferably the only transition metal that is loaded on the small- or medium-pore molecular sieve. Of course, there is a chance that other metals may be present if the catalyst article has other layers or zones disposed thereon, for example, which are for a different purpose and therefore may comprise different components which may contain metals other than Fe. That is, the other metals may be transferred due to physical contact. It is not intended to exclude such embodiments.

In a further aspect, the present invention provide an exhaust gas treatment system comprising the SCR catalyst article according to the first aspect. All preferred embodiments and features described herein in relation to the first aspect apply equally to this aspect.

In a further aspect, the present invention provides an exhaust gas treatment system comprising a first catalyst article comprising the first catalyst composition as defined herein and a second catalyst article downstream of the first catalyst article comprising the second catalyst composition as defined herein. All preferred embodiments and features described herein in relation to the first aspect apply equally to this aspect, where appropriate.

Preferably, the exhaust gas treatment system of this aspect further comprises an ASC article located between the first catalyst article and the second catalyst article. The ASC article may be present as a separate article or brick to the first catalyst article and/or the second catalyst article. Alternatively, the ASC article may be close-coupled or part of the same article or brick as the first catalyst article and/or the second catalyst article, such as in a separate zone on the catalyst article. An ASC has the functionality that it can convert residual ammonia present in the exhaust gas to N₂ and H₂O. The ASC may also convert NOₓ to N₂ and H₂O. Catalysts suitable for such a function are well-known to the skilled person and the particular form of the ASC article is not particularly limited. Suitable ASC articles may comprise a PGM-loaded support material, such as a Pt-loaded zeolite or a Pt-loaded alumina, for example. Suitable ASC compositions may also be described in WO2012138405A1, WO2017134454A1, WO2018178627A1, WO2019186121A1 and EP2885514A1, for example.

Ammonia may be present in the exhaust gas if there is a means for injecting a nitrogenous reductant upstream thereof, or if the exhaust is from an ammonia-combustion engine, for example.

Similarly to the SCR catalyst article, the ASC article may also generate further N₂O in the exhaust gas. Thus, the same advantages related to having the second catalyst composition of the invention downstream of the first/SCR catalyst composition apply to this ASC article embodiment. Such a system therefore also helps to reduce both ammonia and N₂O slip. Such an arrangement may also be particularly advantageous if the exhaust gas is from an ammonia-combustion engine. This is because ammonia concentrations in the exhaust gas may be particularly high when the fuel comprises ammonia. Such an exhaust gas treatment system can therefore reduce both ammonia slip and N₂O slip.

Preferably, the exhaust gas treatment system of this aspect or the above aspect further comprises a means for the injection of a nitrogenous reductant upstream of the second catalyst composition, preferably upstream of the first catalyst composition. The nitrogenous reductant preferably comprises ammonia and/or urea and more preferably is ammonia and/or urea. Other known ammonia precursors may also be suitable.

The effects of the presence of such a reductant upstream of an SCR catalyst are well-known. However, the presence of the ammonia may also enable the Fe-based molecular sieve of the invention to convert the N₂O at a lower temperature than in the absence of ammonia. The additional ammonia may actually also assist in the abatement of N₂O. This mechanism provides a further unexpected benefit associated with the use of the Fe-loaded molecular sieve of the present invention for the treatment of exhaust gas in the embodiments described herein.

In some embodiments, therefore, it may be beneficial to artificially introduce ammonia into the exhaust gas upstream of the second catalyst composition and downstream of the first catalyst composition, i.e. between the first and second catalyst articles, with or without the further means for the injection of a nitrogenous reductant upstream of the first/SCR catalyst composition.

For embodiments in which the exhaust gas is from an ammonia-combustion engine (i.e. in which the engine is an ammonia-combustion engine), then it may not be necessary to include a means for the injection of a nitrogenous reductant upstream of an SCR catalyst, since the exhaust gas may already contain an acceptable concentration of ammonia. However, it may be advantageous for the reasons described herein to increase the concentration of ammonia in the exhaust gas upstream of the SCR catalyst article even further, for example to a level greater than that required for the SCR reaction, so that some ammonia intentionally passes through the SCR catalyst unreacted. This means that some of the ammonia (or nitrogenous reductant) introduced upstream of the SCR catalyst article may still reach the second catalyst composition of the invention.

Alternatively, for a particular use, if it is considered that the concentration of ammonia at the SCR catalyst composition is acceptable, then a means for the injection of a nitrogenous reductant may be (only) provided between the SCR catalyst composition and the second catalyst composition of the invention (i.e. between the first and second catalyst articles), for example, so that it is certain that some ammonia will reach the second catalyst composition to achieve the benefits described herein.

Moreover, since the second catalyst article (comprising the second catalyst composition) may preferably be at least the second or third catalyst article present in the exhaust gas treatment system in the upstream to downstream direction, the temperature of the exhaust gas at the location of the second catalyst article of the invention may be relatively low. This means that the temperature of the second catalyst article itself may be relatively low.

Accordingly, ensuring that there is ammonia present in the exhaust gas that contacts the second catalyst article provides further advantages because, as described herein, the presence of ammonia may enable the Fe-based molecular sieve of the invention to convert the N₂O at lower temperature than in the absence of ammonia.

Preferably, the exhaust gas treatment system further comprises a first means for the injection of a nitrogenous reductant upstream of the first catalyst article and a second means for the injection of a nitrogenous reductant between the first catalyst and the second catalyst article. Having a means for the injection of a nitrogenous reductant in both of these locations may enable all of the associated advantages discussed above to be achieved. Moreover, this arrangement may enable the particular concentration of ammonia in the exhaust gas at different locations in the exhaust gas treatment system to be tuned and/or varied, for example depending on the particular use or the particular conditions. For example, at low temperatures near the start of an engine cycle, it may be beneficial to introduce a relatively higher concentration of nitrogenous reductant immediately upstream of the second catalyst article of the invention, i.e. while the catalyst may be cold, and then introduce a relatively lower concentration of nitrogenous reductant as the engine and therefore the second catalyst article of the invention starts to warm up to a higher operating temperature. When the exhaust gas treatment system further comprises an ASC article upstream of the second catalyst article, then the second means for the injection of a nitrogenous reductant is preferably downstream of the ASC article. Preferably the second catalyst article is the last catalytic component of the exhaust system before the treated exhaust gases are released to the atmosphere.

The second catalyst article may be configured to be electrically heated. In other words, the second catalyst article is preferably an electrically heated catalyst (EHC). As described above, since the second catalyst article may preferably be at least the second or third catalyst article present in the exhaust gas treatment system in the upstream to downstream direction, the temperature of the exhaust gas at the location of the second catalyst article of the invention may be relatively low. This also means that the activity of the catalyst may be lower than its potential. This problem can be solved by actively heating the second catalyst article by means of an electric heater. EHCs, in general, are known to the skilled person. This embodiment is not limited to a particular type of EHC. If an ASC is present, then the EHC may not be required (or simply less heating may be required), since the ASC may create an exotherm during use that may heat the second catalyst article, particularly if the ASC and the second catalyst article of the invention are close-coupled.

In a further aspect, the present invention provides a fuel combustion and exhaust gas system comprising an engine and the exhaust gas treatment system described herein. It should be understood that the engine is in fluid communication with the exhaust gas treatment system. Preferably, the engine is a diesel-, hydrogen-, methanol- or nitrogen-containing-fuel-combustion engine.

All preferred embodiments and features described herein in relation to the other aspects apply equally to this aspect.

The term "diesel-, hydrogen-, methanol- or nitrogen-containing-fuel-combustion engine" as used herein may encompass an engine that is designed to burn a fuel that is or comprises diesel, hydrogen, methanol or molecules comprising nitrogen, respectively. Preferably, greater than 30 mol.% of the molecules in the nitrogen-containing fuel contain nitrogen, more preferably greater than 50 mol.%, even more preferably greater than 70 mol.% and still more preferably greater than 90 mol.%. Preferably, the nitrogen-containing fuel comprises one or more of ammonia, an ammonia precursor (such as amines and/or urea) and organic waste. Preferably, the nitrogen-containing fuel comprises ammonia. Of course, the terms "nitrogen-containing-fuel- or hydrogen-combustion engine" or the like may therefore encompass an engine that is designed to burn a dual- or mixed-fuel comprising a nitrogen-containing fuel (preferably ammonia) or hydrogen, such as a fuel mixed with diesel, marine diesel oil, heavy fuel oil and/or natural gas. In some alternative embodiments, the term "nitrogen-containing-fuel- or hydrogen-combustion engine" may encompass a system that burns such fuels, such as in industrial processes including ammonia cracking and (organic) waste incineration processes, rather than an engine for use in automobiles and the like, for example. However, preferably, the engine is an engine in the conventional sense, preferably an engine for use in automobiles and the like.

In a further aspect, the present invention provides a method of treating an exhaust gas, the method comprising passing an exhaust gas through the exhaust gas treatment system described herein, preferably wherein the exhaust gas is provided by a diesel-, hydrogen-, methanol- or nitrogen-containing-fuel-combustion engine. Preferably, the temperature of the exhaust gas and/or the catalyst article is from 350 to 500°C.

All preferred embodiments and features described herein in relation to the other aspects apply equally to this aspect.

In a further aspect, the present invention also provides the use of an Fe-loaded small- or medium-pore molecular sieve having a SAR of from 6 to 19 to reduce the concentration of N₂O in an exhaust gas.

All preferred embodiments and features described herein in relation to the other aspects apply equally to this aspect. As described herein, such a use has not previously been contemplated. The advantages of such a use are discussed herein.

The invention will now be described in relation to the following non-limiting drawings in which:

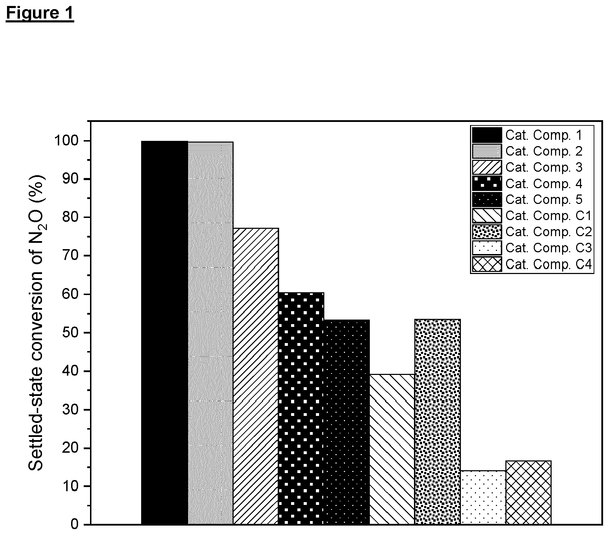

Figure 1 shows the N₂O conversion at 400°C for five catalyst compositions corresponding to an Fe-loaded small- or medium-pore zeolite suitable for the second catalyst composition of the invention compared to four comparative catalyst compositions.

The invention will now be described in relation to the following non-limiting examples.

### EXAMPLES

### Example 1:

Nine catalyst compositions were manufactured by incipient wetness impregnation of an FeCl₂ salt into a pre-prepared zeolite having a particular framework and SAR. Each catalyst composition was loaded with 3 wt.% Fe, based on the total weight of the Fe/zeolite. In particular, a metal salt solution using FeCl₂ (Alfa Aesar Iron(II) chloride, anhydrous, 99.5% (metals basis)) and double distilled H₂O was prepared and then added dropwise to the relevant zeolite sample. The mixture was homogenously mixed until a wet sand appearance was observed. After preparation, the samples were dried for 2 hours at 105°C in a static oven. Once dried, the powders were activated in a tube furnace with a heating rate of 10°C/min up to 500°C for 2 hours in an N₂ atmosphere.

The composition of the zeolite for each Catalyst Composition and each Catalyst Composition's N₂O performance at each temperature is shown in Table 1 below.

Catalyst Compositions 1-5 correspond to Fe-loaded small- or medium-pore zeolites suitable for the second catalyst composition of the invention. Catalyst Compositions C1-C4 are comparative examples not within the scope of the Fe-loaded small- or medium-pore molecular sieves of the invention.

**Table 1**

| | | | **N₂O performance (%)** | | | |
|---|---|---|---|---|---|---|
| **Catalyst Composition** | **Framework** | **SAR** | **T=300°C** | **T=350°C** | **T=375°C** | **T=400°C** |
| 1 | CHA | 7 | 5.8 | 27.1 | 73.4 | 99.8 |
| 2 | CHA | 10 | 4.9 | 40.5 | 75.4 | 99.5 |
| 3 | CHA | 13 | - | - | - | 77.2 |
| 4 | AEI | 13 | 7.6 | 13.5 | 24.4 | 60.4 |
| 5 | FER | 18 | 0.9 | 6.1 | 19.7 | 53.3 |
| | | | | | | |
| C1 | CHA | 25 | - | - | - | 39.1 |
| C2 | AEI | 20 | 6.9 | 13.0 | 22.7 | 53.5 |
| C3 | BEA | 28 | - | - | - | 14.0 |
| C4 | MFI | 22 | 6.3 | 11.3 | 14.5 | 16.6 |

Table 1 shows the results of N₂O performance tests at four different temperatures: 300, 350, 375 and 400°C. In particular, 0.2 g of pelletised sample was tested in a total flow of 100 ml/min, of which 58% was He, 40% Ar, 1% N₂O and 1% O₂. The temperatures explored ranged from 300 to 400°C. A ramp rate of 10°C/min was set up for each temperature followed by a dwell of 45 minutes. The data were analysed using a mass spectrometer. The "N₂O performance" refers to the N₂O conversion at that particular temperature, i.e. the percentage of N₂O consumed from the sample gas after passing through the example catalyst, on a ppm basis. For the avoidance of doubt, CHA and AEI are small-pore zeolites, FER and MFI are medium-pore zeolites and BEA is a large-pore zeolite.

As described herein, it can be seen that the N₂O performance of the catalyst compositions that may be used in the SCR catalyst article and the exhaust gas treatment systems of the invention is significantly higher than the comparative catalyst compositions, in which the zeolites have higher SAR and/or are large-pore zeolites. Moreover, surprisingly, the N₂O performance of the catalyst composition increases as the SAR decreases. The N₂O performance of the CHA zeolite having a SAR of 7 and the CHA zeolite having a SAR of 10 (Catalyst Compositions 1 and 2, respectively) is comparable.

Figure 1 shows the N₂O conversion at 400°C for five catalyst compositions corresponding to an Fe-loaded small- or medium-pore zeolite suitable for the second catalyst composition of the invention compared to four comparative catalyst compositions. In other words, Figure 1 is a visual representation of the rightmost column of Table 1. From left to right, the bars in Figure 1 relate to, in order, Catalyst Composition 1, Catalyst Composition 2, Catalyst Composition 3, Catalyst Composition 4, Catalyst Composition 5, Catalyst Composition C1, Catalyst Composition C2, Catalyst Composition C3 and Catalyst Composition C4.

The foregoing detailed description has been provided by way of explanation and illustration, and is not intended to limit the scope of the appended claims. Many variations in the presently preferred embodiments illustrated herein will be apparent to one of ordinary skill in the art and remain within the scope of the appended claims and their equivalents.

## Claims

1. An SCR catalyst article comprising a substrate having thereon a second catalyst composition downstream of a first catalyst composition, wherein the first and second catalyst compositions are different and wherein the first catalyst composition is an SCR catalyst composition and the second catalyst composition comprises an Fe-loaded small- or medium-pore molecular sieve, the small- or medium-pore molecular sieve having a silica-to-alumina ratio (SAR) of from 6 to 19.

2. The SCR catalyst article of claim 1, wherein the first catalyst composition comprises Cu/CHA or a V-based SCR catalyst.

3. The SCR catalyst article of claim 1 or claim 2, wherein the small- or medium-pore molecular sieve of the second catalyst composition has a framework defined by a Framework Type Code selected from CHA, FER, MFI, AEI and AEI-CHA intergrowth, preferably CHA and AEI, more preferably CHA.

4. The SCR catalyst article of any preceding claim wherein the small- or medium-pore molecular sieve of the second catalyst composition has a SAR of from 6 to 13, preferably from 7 to 12, more preferably from 9 to 11, even more preferably about 10.

5. The SCR catalyst article of any preceding claim, wherein the small- or medium-pore molecular sieve of the second catalyst composition is loaded with at least 0.5 wt.% Fe, preferably from 1.5 to 4 wt.% Fe, more preferably about 3 wt.% Fe, based on the total weight of the Fe-loaded small- or medium-pore molecular sieve.

6. The SCR catalyst article of any preceding claim, wherein the SCR catalyst article is a flow-through monolith or a wall-flow filter.

7. The SCR catalyst article of any preceding claim, wherein the first catalyst composition is present in a first zone and the second catalyst composition is present in a second zone, and wherein the first zone forms from 40 to 90% of an axial length of the SCR catalyst article and the second zone forms from 60 to 10% of an axial length of the SCR catalyst article, preferably wherein the first zone forms from 75 to 90% of an axial length of the SCR catalyst article and the second zone forms from 25 to 10% of an axial length of the SCR catalyst article.

8. The catalyst article of any preceding claim, wherein the first catalyst composition is present in a first zone and the second catalyst composition is present in a second zone, and wherein the first zone extends from an inlet end of the SCR catalyst article and the second zone extends from an outlet end of the SCR catalyst article.

9. An exhaust gas treatment system comprising the SCR catalyst article according to any of claims 1 to 8.

10. An exhaust gas treatment system comprising a first catalyst article comprising the first catalyst composition as defined in claim 1 or claim 2 and a second catalyst article downstream of the first catalyst article comprising the second catalyst composition as defined in claim 1, 3, 4 or 5.

11. The exhaust gas treatment system of claim 10 further comprising an ammonia slip catalyst (ASC) article located between the first catalyst article and the second catalyst article.

12. The exhaust gas treatment system of any of claims 9 to 11, further comprising a means for the injection of a nitrogenous reductant upstream of the second catalyst composition, preferably upstream of the first catalyst composition, preferably wherein the nitrogenous reductant is ammonia and/or urea.

13. A fuel combustion and exhaust gas system comprising an engine and the exhaust gas treatment system of any of claims 9 to 12, preferably wherein the engine is a diesel-, hydrogen-, methanol- or nitrogen-containing-fuel-combustion engine.

14. A method of treating an exhaust gas, the method comprising passing an exhaust gas through the exhaust gas treatment system of any of claims 9 to 12, preferably wherein the exhaust gas is provided by a diesel-, hydrogen-, methanol- or nitrogen-containing-fuel-combustion engine.

15. Use of an Fe-loaded small- or medium-pore molecular sieve having a SAR of from 6 to 19 to reduce the concentration of N₂O in an exhaust gas.
